# EUROPÄISCHE PATENTANMELDUNG

(11) **EP 1 614 491 A1**
(43) Veröffentlichungstag der Anmeldung: **11.01.2006**
(21) Anmeldenummer: 05006527.5
(22) Anmeldetag: 26.03.2005
(51) Int. Cl.: B23B 5/16, B23Q 5/44

(54) **Elektrodenkappenfräser mit Höhenausgleich**

(30) Priorität: 07.07.2004 DE 202004010653 U
(71) Anmelder: Bräuer, Andreas, 09456 Annaberg-Buchholz (DE)
(72) Erfinder: Bräuer, Andreas, 09456 Annaberg-Buchholz (DE)
(74) Vertreter: Köhler, Tobias

(57) **Zusammenfassung**

Die Erfindung betrifft ein Werkzeug zum Fräsen von Elektrodenkappen mit Höhenausgleich, welches aus einer Antriebseinheit und einem mindestens ein Werkzeug aufweisenden Fräskopf in einer Fräskopfaufnahme besteht und bei welchem die Antriebseinheit eine Rotationsbewegung mittels einer Übertragungswelle auf ein den Fräskopf antreibendes Getriebe überträgt und gleichzeitig eine Höhenverstellung mittels mindestens einem Höhenstellement realisiert.

## Beschreibung

Die Erfindung betrifft ein Werkzeug zum Fräsen von Elektrodenkappen.

In vielen technischen Bereichen ist es notwendig, Fräsvorgänge durchzuführen, ohne dass das zu bearbeitende Werkstück einer herkömmlichen Fräsmaschine zugeführt werden kann. In Fällen, bei denen ein stationäres Fräswerkzeug nicht einzusetzen ist, ist es regelmäßig notwendig, das Fräswerkzeug dem Werkstück zu zuführen.
Ein solcher Anwendungsfall, bei dem das Fräswerkzeug dem Werkstück zu zuführen ist, betrifft auch das Bearbeiten von Elektrodenkappen von Widerstandsschweißanlagen, welche regelmäßig zwischen Schweißungen mittels Fräsen nachbearbeitet werden, um ihre Maßhaltigkeit gewährleisten zu können.

In diesem Fall ist eine bewegliche oder feststehende spezielle Fräsvorrichtung erforderlich, die die Elektroden als integrierten Bestandteil der Schweißanlage bearbeitet.

Bei den bekannten Lösungen ist es als nachteilig zu betrachten, dass die konstruktive Lösung der Fräseinrichtung relativ große geometrische Ausdehnungen aufweisen, welche das Zuführen des Fräswerkzeuges zum Werkstück verkomplizieren.

Aufgabe der Erfindung ist es, eine Vorrichtung zu schaffen welche es ermöglicht, die Nachteile des Standes der Technik zu beheben und einen sicheren Höhenausgleich gewährleistet.

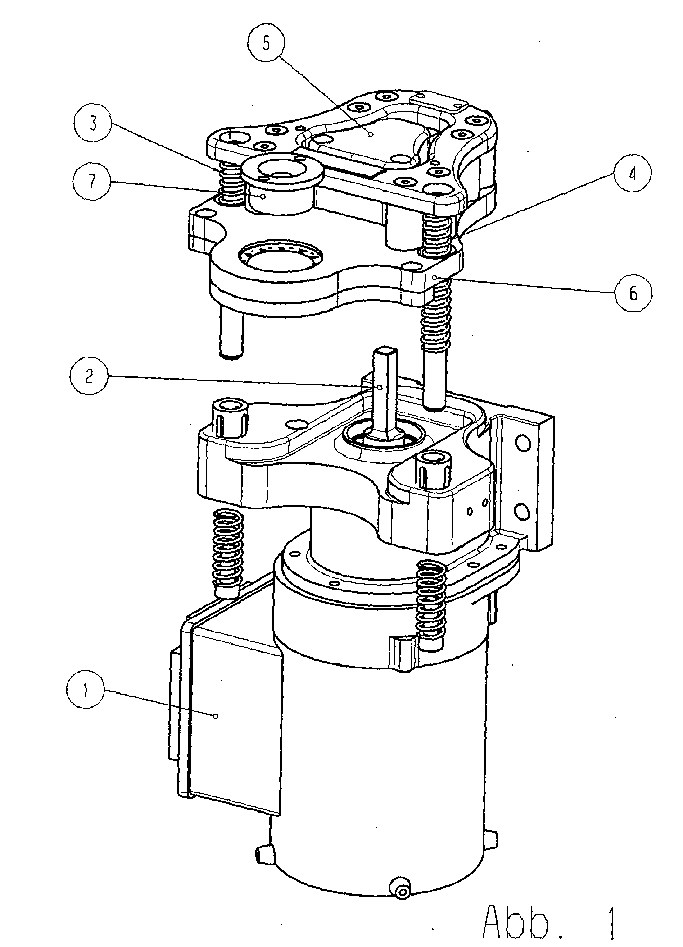

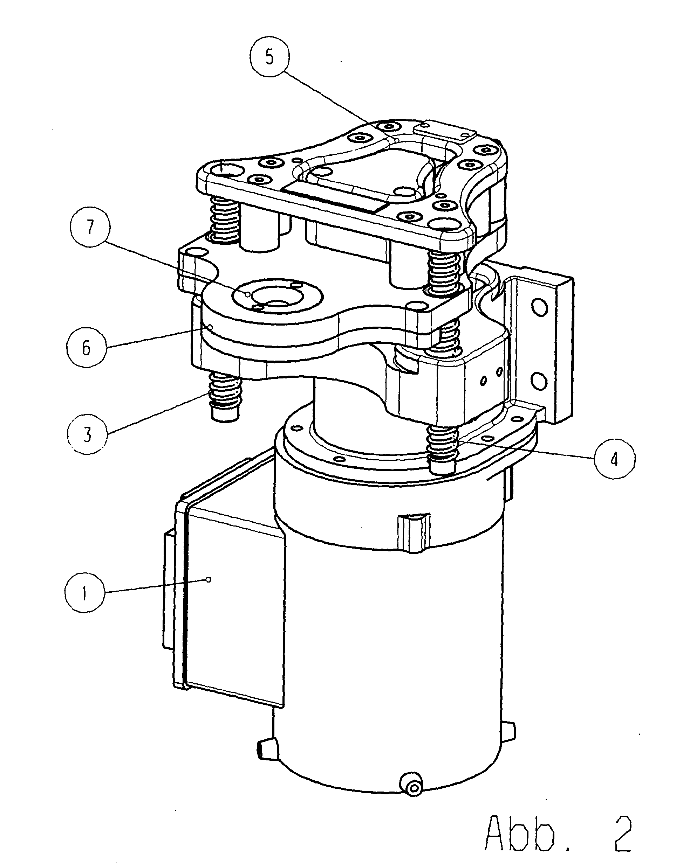

Erfindungsgemäß wird diese Aufgabe durch eine Vorrichtung gemäß der Schutzansprüche 1 bis 4 gelöst, nachfolgend soll dieses System anhand der Abbildungen 1 und 2 und dem nachfolgenden Ausführungsbeispiel näher erläutert werden.

Die erfindungsgemäße Vorrichtung besteht aus einer Antriebseinheit 1 mit einem daran angeordneten Ausgleichsblock und ermöglicht ein Verschieben des Werkzeuges in Antriebsachsrichtung auch bei laufendem Antrieb.

In dieser Antriebseinheit 1 wird eine Übertragungswelle 2 mit einer Rotationsbewegung unter Einsatz bekannter technischer Mittel beaufschlagt.

In dem hier beschriebenen Ausführungsbeispiel wird eine konstruktive Lösung mit zwei Höhenstellelementen 3 und 4 gezeigt, welche als Spindeln ausgebildet sind.
Diese Höhenstellelemente 3 und 4 sind mittels eines Getriebes 5, welches auch die Fräskopfaufnahme 6 und den Fräskopf 7 aufnimmt und diesen auch antreibt, zu betreiben.
Hierzu sind im Getriebe 5 bekannte, den Spindeln 3 und 4 zugeordnete Gegenstücke angeordnet, welche durch Verfahren der Gegenstücke auf den Spindeln 3 und 4 die gesamte Fräskopfaufnahme 6 mit dem Fräskopf 7 in seiner Höhe zur Antriebseinheit 1 verfährt.

Eine besondere Form der erfindungsgemäßen Lösung ist ebenfalls in diesem Ausführungsbeispiel in der Abbildung 2 gezeigt.

Hier ist die Übertragungswelle 2 gemäß einer besonderen erfindungsgemäßen Ausgestaltung als Vierkantprofil ausgeführt, es ist erfindungsgemäß aber auch jede weitere einen Formschluss ermöglichende Ausführung dieser Welle 2 möglich.

## Patentansprüche

1. Elektrodenkappenfräser mit Höhenausgleich, bestehend aus einer Antriebseinheit und einem mindestens ein Werkzeug aufweisenden Fräskopf in einer Fräskopfaufnahme, **dadurch gekennzeichnet, dass** die Antriebseinheit eine Rotationsbewegung mittels einer Übertragungswelle auf ein Getriebe überträgt, welches den Fräskopf in einer Fräskopfaufnahme antreibt und gleichzeitig eine Höhenverstellung mittels mindestens einem Höhenstellement realisiert.

2. Vorrichtung nach Anspruch 1, **dadurch gekennzeichnet, dass** das Höhenstellelement oder die Höhenstellelemente Spindeln sind, welche mittels entsprechenden Gegenstücken in der Fräskopfaufnahme höhenverfahren werden.

3. Vorrichtung nach Anspruch 1, **dadurch gekennzeichnet, dass** die Übertragungswelle die Rotationsbewegung durch Formschluss auf die Fräskopfaufnahme überträgt.

4. Vorrichtung nach Anspruch 3, **dadurch gekennzeichnet, dass** die Übertragungswelle einen mindestens dreieckigen Querschnitt aufweist.
